Europäisches Patentamt

European Patent Office

Office européen des brevets

(19)

(11) Publication number: **0 032 809**
A1

(12) **EUROPEAN PATENT APPLICATION**

(21) Application number: **81300150.0**

(51) Int. Cl.³: **B 60 P 1/44**

(22) Date of filing: **14.01.81**

(30) Priority: **15.01.80 GB 8001336**

(43) Date of publication of application: **29.07.81**
Bulletin **81/30**

(84) Designated Contracting States: **BE DE FR GB NL**

(71) Applicant: **RATCLIFF TAIL LIFTS LIMITED, Bessemer Road, Welwyn Garden City Hertfordshire AL7 1ET (GB)**

(72) Inventor: **Brooman, David Henry, 90 Letchmore Road, Stevenage Hertfordshire (GB)**

(74) Representative: **Mayes, Stuart David et al, BOULT, WADE & TENNANT 27 Furnival Street, London, EC4A 1PQ (GB)**

(54) **Platform and stop bar assembly.**

(57) A platform (10) and stop bar assembly comprises a stop bar (11) extending along and adjacent an edge of the platform. The stop bar has arms (12) extending therefrom and the arms are pivotally mounted on the platform (10) to allow the stop bar to move in an arc about a pivot axis. Levers (14) are pivotally mounted on the platform and have support plates (15) for supporting the arms (12). Rotation of the levers (14) moves the stop bar between a first position in which the stop bar lies at or below the level of the platform and a second position in which the stop bar lies above the level of the platform.

ACTORUM AG

PLATFORM AND STOP BAR ASSEMBLY

The invention relates to stop bars for platforms for preventing loads from falling off platforms. More particularly but not exclusively the invention relates to platform and stop bar assemblies for vehicle tail lifts.

According to the invention there is provided a platform and stop bar assembly comprising a stop bar extending along and adjacent an edge of the platform, the stop bar having arm means extending therefrom and the arm means being pivotally mounted on the platform to allow the stop bar to move in an arc about a pivot axis defined by the pivotal mounting of the arm means, the assembly further comprising lever means pivotally mounted on the platform; the lever means having support means for supporting the stop bar, rotation of the lever means moving the stop bar about said stop bar pivot axis between a first position in which the stop bar lies at or below the level of the platform and a second position in which the stop bar lies above the level of the platform.

The assembly may comprise means for preventing movement of the stop bar from said first position otherwise than by applying a force on the lever means. Said movement preventing means may comprise abutment means on the lever means and abutment means on the arm means, the positions of said abutment means on the lever means and arm means being such that application of force directly on the stop bar causes mutual engagement of said abutment means, whereas rotation of said lever means to move the stop bar from said first position causes separation of said abutment means.

Means may be provided for preventing movement of the stop bar from said second position otherwise than by applying force on the lever means. The means for preventing movement of the stop bar from the second position may comprise the lever abutment means, the relative positions of the lever abutment means and the support means on the lever means being such that when the stop bar is in the second position, application of force directly on the stop bar causes the stop bar to engage the lever abutment means whereas rotation of the lever means in the appropriate direction separates the lever abutment means from the stop bar.

The stop bar in the first position may be separated from the associated edge of the platform. The stop bar may be circular in cross-section or alternatively triangular in cross-section to provide a ramp edge for the platform when the stop bar is in the first position.

The invention further provides vehicle load lifting and lowering apparatus comprising a platform and stop bar assembly according to the invention.

By way of example, one embodiment of a platform and stop bar assembly and a modification thereto according to the invention will now be described with reference to the accompanying drawings in which:-

Figure 1 is a side view of a platform and stop bar assembly;

Figure 2 is a plan view of the platform and stop bar assembly of Figure 1; and

Figure 3 is a prospective view of part of a modified platform and stop bar assembly;

A platform 10 for example of vehicle load lifting and lowering apparatus, has a stop bar 11 pivotally mounted along and adjacent one edge thereof. The stop bar 11 has a pair of arms 12 extending therefrom and the arms 12 are pivotally mounted on the platform 10 so that the stop bar 11 may be moved in an arc about a pivot axis 13.

-4-                    0032809

On each side of the platform 10 is pivotally mounted a lever 14 and each lever 14 has secured to it support means in the form of a plate 15. At the end of each lever 14 is secured a plate 16. The levers 14 are secured to a rod 17 passing through the platform 10 so that the levers 14 both are rotatable about the same pivot axis and both levers rotate together.

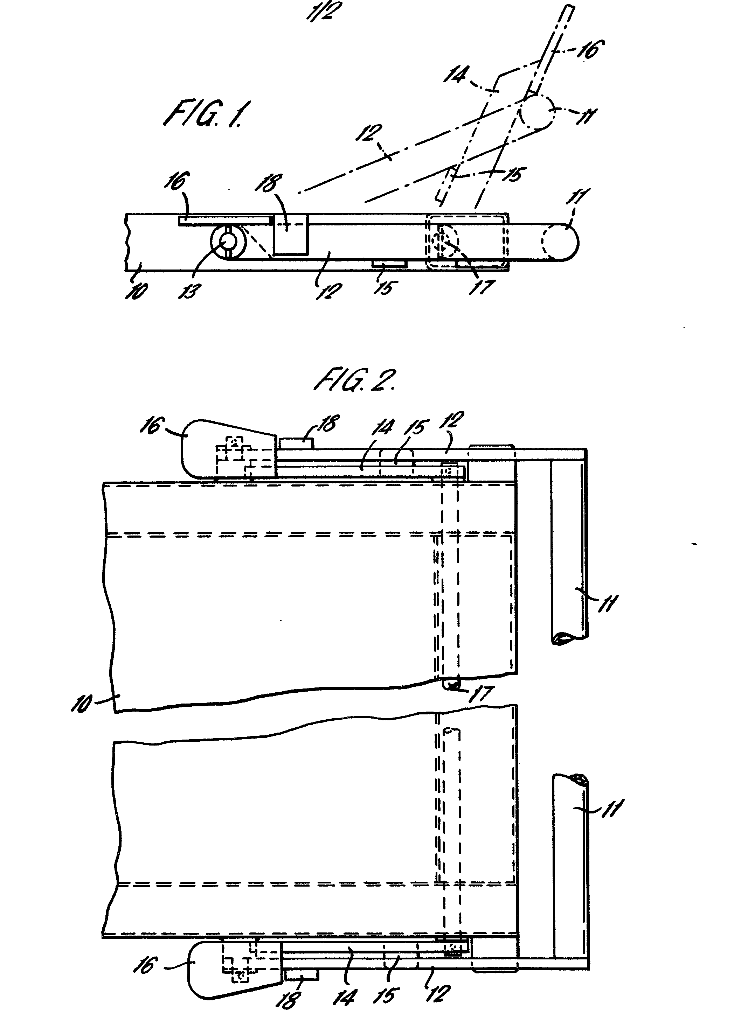

Rotation of the levers 14 in a clock-wise direction as shown in Figure 1 cause the stop bar 11 to move from a first position shown in full lines in Figure 1 in which a stop bar lies just below the level of the platform 10 and a second position shown in phantom lines in Figure 1 in which the stop bar is raised above the level of the platform 10 to provide a stop for preventing articles or loads falling off the platform 10.

Each arm 12 is provided with an abutment block 18 for maintaining the stop bar in the first position From Figure 1 it can be seen that if an attempt is made to move the stop bar 11 by applying a force directly to it the plate 16 and abutment block 18 will act directly on one another to prevent such movement. The only way that the stop bar may be moved is to rotate the lever in a clock-wise direction as shown in Figure 1 where upon the support plate 15 will start to rotate the arms 12 in an anti clock-wise direction and the plate 16 and abutment block 18 will be separated from one another.

Further rotation of the levers 14 in the clock-wise direction as shown in Figure 1 causes the stop bar 11 to be raised to a maximum height and then to drop slightly to the second position shown in phantom lines in Figure 1. The second position is reached when the plate 16 at the end of each lever contacts the stop bar 11. It can be seen from Figure 1 that if a force is applied directly on the stop bar 11, movement in an upward direction will be prevented by engagement of the end plate 16 with the stop bar 11 and movement in a downward direction will be prevented by engagement of the support plates 15 with the arms 12. Thus the only way the stop bar 11 can be returned to the first position is by rotating the levers 14 back in an anti-clock-wise direction.

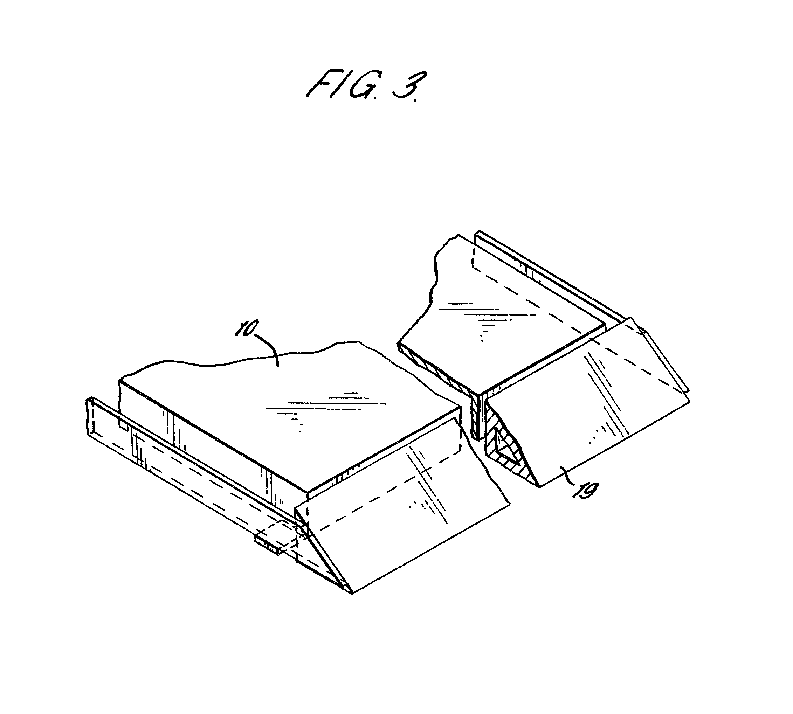

In the embodiment of Figures 1 and 2, the stop bar 11 in the first position is separated slightly from the edge of the platform 10. This provides a convenient hand grip to assist in raising a pivotally mounted platform to a vertical position.

In a modified embodiment of a platform and stop bar assembly, a stop bar 19 is of triangular cross-section to provide a ramp surface at the platform edge when the stop bar is in the first position. This modification is particularly advantageous where wheeled loads are to be moved onto the platform 10.

CLAIMS:

1.   A platform and stop bar assembly comprising a stop bar (11) extending along and adjacent an edge of the plaform (10) the stop bar (11) having arm means (12) extending therefrom and the arm means (12) being pivotally mounted on the platform (10) to allow the stop bar (11) to move in an arc about a pivot axis defined by the pivotal mounting of the arm means (12), the assembly further comprising lever means (14) pivotally mounted on the platform (10), the lever means (14) having support means (15) for supporting the stop bar (11) rotation of the lever means (14) moving the stop bar (11) about said stop bar pivot axis between a first position in which the stop bar (11) lies at or below the  level of the platform (10) and a second position in which the stop bar (11) lies above the level of the platform (10).

2.   A platform and stop bar assembly as claimed in Claim 1 characterised by means (16,18) for preventing movement of the stop bar from said first position otherwise than by applying a force on the lever means (14).

3.   A platform and stop bar assembly as claimed in Claim 2 characterised in that said movement preventing means comprise abutment means (16) on the lever means (14) and abutment means (18) on the arm means (12), rotation of the positions of said abutment means (16) on the lever means and arm means (12) being such that application of force directly on the stop bar (11) causes mutual engagement of said abutment means (16,18) whereas rotation of said lever means (14) to move the stop bar (11) from said first position causes separation of said abutment means (16,18).

4.  A platform and stop bar assembly as claimed in any preceding claim characterised by means (15,16) for preventing movement of the stop bar from said second position otherwise than by applying a force on the lever means (14).

5.  A platform and stop bar assembly as claimed in Claim 4 as depdendent on Claim 3 wherein said means for preventing movement of said stop bar (11) from the second position comprises said lever abutment means (16) the relative positions of said lever abutment means (16) and said support means (15) on the lever means (14) being such that when the stop bar (11) is in said second position, application of force directly on the stop bar (11) causes the stop bar (11) to engage the lever abutment means (16) whereas rotation of the lever means (14) in the appropriate direction separates the lever abutment means (16) from the stop bar (11).

6.  A platform and stop bar assembly as claimed in any preceding claim characterised in that the stop bar (11) in said first position is separated from the associated edge of the platform (10).

7.  A platform and stop bar assembly as claimed in any preceding claim characterised in that the stop bar (11) is circular in cross-section.

8.  A platform and stop bar assembly as claimed in any one of the Claims 1 to 5 the stop bar (19) is triangular in cross-section to provide a ramp edge for the platform (10) when the stop bar (19) is in the first position.

0032809

FIG. 1.

FIG. 2.

FIG. 3.

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | B 60 P 1/44 |
| | LU - A - 78 580 (TOUSSAINT) | 1 | |
| | * Abstract 1; figure 3 * | | |
| | US - A - 2 792 134 (KINNEE) | 1,8 | |
| | * Abstract 1; figure 2 * | | |
| A | FR - A - 2 244 645 (PEUGEOT) | 1 | |
| | * Abstract 1; figure 4 * | | |
| A | US - A - 3 451 572 (ROSSONI) | 1 | |
| | * Abstract 1; figure 2 * | | |

**TECHNICAL FIELDS SEARCHED (Int. Cl.³)**

B 60 P
B 66 F
B 65 G
B 62 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21.04.1981 | SCHMITTER |

EPO Form 1503.1   06.78